# EUROPEAN PATENT SPECIFICATION

(11) **EP 1 210 831 B1**
(45) Date of publication and mention of the grant of the patent: **16.12.2009**
(21) Application number: 00958559.7
(22) Date of filing: 07.09.2000
(51) Int. Cl.: H04W 88/02, H04L 29/08

(54) **SIGNALLING MECHANISM FOR WIRELESS APPLICATION PROTOCOL**
SIGNALISIERUNGSMECHANISMUS FÜR EIN PROTOKOLL FÜR DRAHTLOSE ANWENDUNG
MECANISME DE SIGNALISATION POUR PROTOCOLE D'APPLICATION RADIO

(30) Priority: 09.09.1999 FI 991920
(43) Date of publication of application: 05.06.2002
(73) Proprietor: SmartTrust Systems Oy, 00510 Helsinki (FI)
(72) Inventor: HEINONEN, Petteri, FIN-02610 Espoo (FI)
(74) Representative: Söderman, Päivi Karin Lisbeth
(86) International application number: PCT/FI2000/000758
(87) International publication number: WO 2001/019107

(56) References cited:
- EP-A2- 0 748 135
- WO-A2-00/18161
- US-A- 5 915 225

## Description

### Background of the invention

The invention relates to methods and equipment for communicating with a subscriber identity module, or a SIM card, of a mobile station. A mobile station comprises a mobile equipment (ME) and SIM card, or 'SIM' in short.

In addition to providing a speech path between the parties of a call, modern digital mobile communication systems support several different services. Technical specifications for implementing such service are being coordinated e.g. by the European Telecommunication Standard Institute (ETSI) and the WAP (=Wireless Application Protocol) Forum, which is a consortium of major telecommunication manufacturers and operators. Previously, the SIM card has mainly served two purposes, authenticating the user (in cooperation with the network) and storing names and associated telephone numbers. A recent trend in developing new technical means for new services is to enhance the role of the SIM card, to the extent that the roles of the ME and the SIM may be reversed. For instance, ETSI recommendation GSM 11.14 defines an interface called SIM Application Toolkit (SAT) which extends the Network to SIM command interface defined in ETSI GSM 11.11. The SAT enables e.g. interactive inquiries to the user of the mobile station. Applications created with the SAT typically appear as menus extending the command set which the mobile station provides to the user. In addition, the SAT can be used for downloading non-interactive functionality into the SIM. By virtue of the SAT, the SIM is becoming the master, which communicates with the network via the ME, which in turn acts as a slave to the SIM. It should be noted that in future mobile communication system, e.g. UMTS, the SIM may be called USIM. US 5915225, WO 00/18161 A2 and EP 0748135 also disclose techniques for addressing data residing in a SIM card. WO 00/18161 was not published at the priority date of the present application.

A residual problem with existing standard protocols is that the signalling mechanisms between the network and the SIM are awkward to use. For instance, it is not clear if or how the SAT can be used from a WAP protocol stack. Naturally, it is possible to send a short message, but longer data streams must be split into many short messages, which is somewhat complicated. The problem could also be solved by defining new commands and/or protocols, but such a solution would be incompatible with existing SIM cards and SIM card interfaces.

### Disclosure of the invention

An object of the invention is to provide a mechanism for improving communication between the SIM card and the mobile equipment, i.e. the remaining part of a mobile station. In other words, the invention aims at providing interaction with a SIM card. This object is achieved with methods and equipment which are characterized by what is disclosed in the attached independent claims. Preferred embodiments of the invention are disclosed in the attached dependent claims.

The invention is based on recognising the above problem, i.e. realising that a problem exists and that new useful services can be implemented by finding this problem and a solution for it. The solution is based on an idea of "fooling" the SIM to believe that information has been sent to the mobile station in a low-level connectionless messages, such as a short message or a cell broadcast message, whereas the information may be sent to the mobile station via a higher-level connection-oriented protocol, such as WAP or TCP/IP, or the information may be generated locally, i.e. at the mobile station-side of the radio interface. For the purposes of the invention, a crucial distinction between a low-level and a high-level protocol is that a high-level protocol allows sending an arbitrarily long data stream. It should be noted that a high-level protocol may use a low-level protocol as part of a transmission path.

One aspect of the invention relates to conveying information generated at the fixed side of the radio network. Another aspect relates to conveying information generated locally. 'Locally' means that the information is generated at the mobile station-side of the radio interface. The information may be generated by a software module in the mobile equipment itself, or it may be received via the user interface (keypad) of the mobile station or via a short-range communication channel, such as a data cable, an infrared link or Bluetooth. 'Short-range' means several orders of magnitude shorter than the maximum length of the radio path of a mobile communication system. It should be noted that these aspects are not mutually exclusive, and a mobile station preferably implements both aspects of the invention.

According to the invention, the mobile equipment is provided with a software extension block which is arranged to:
- receive information locally and/or via a high-level over-the-air protocol, such as WAP or TCP/IP; and
- send this information to the SIM card by emulating reception of information via a low-level connectionless protocol.

Because the invention makes novel use of existing protocols and interfaces, compatibility with existing SIM cards and SIM card interfaces is maintained. The invention requires very few modifications to existing hardware or software.

### Brief description of the drawings

The invention will be described in more detail by means of preferred embodiments with reference to the appended drawing wherein:
Fig. 1 is a block diagram illustrating the general concept of the invention; and
Fig 2 is a signalling diagram illustrating one possible application of the invention.

### Detailed description of the invention

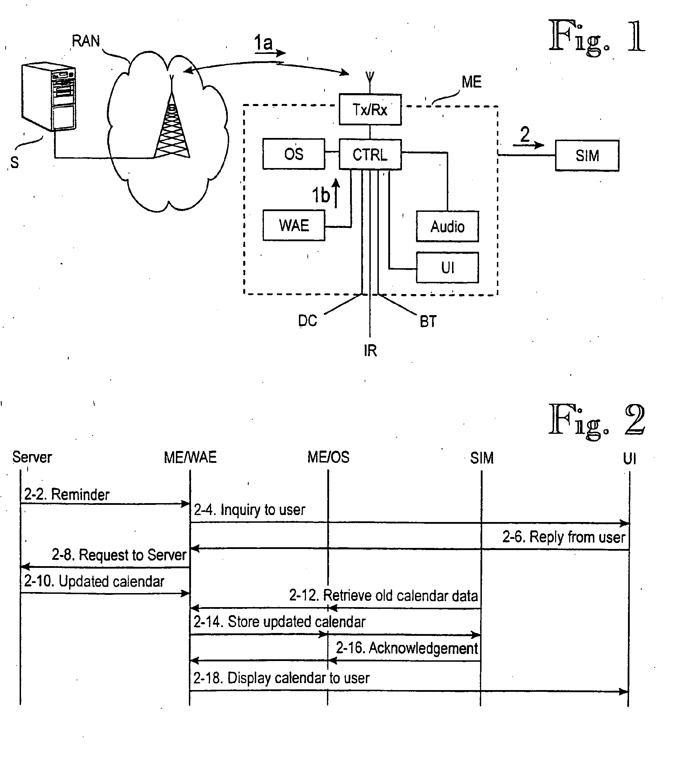

Fig. 1 is a block diagram illustrating the general concept of the invention. The section labelled 'RAN' (Radio Access Network) depicts the fixed side of the radio network. (In a GSM system, the RAN is usually called Base Station Subsystem, BSS. In an UMTS system, the RAN is called URAN). For transmitting short messages (SM) or cell broadcasts (CB), the network may comprise, respectively, one or more short message service centres SMSC or cell broadcast centres (CBC). For implementing various services, the network may comprise, or be operationally coupled to a server S. A concrete example of such a server is a Service Control Point (SCP) of an intelligent network. Such elements are well known to those skilled in the art, and further details of the radio network are not essential for understanding the invention.

As regards the invention, a mobile station MS comprises two major sections, a SIM card for storing subscriber/subscription-specific information. The remaining part of the mobile station is called a mobile equipment ME. It comprises a radio section Tx/Rx, a user interface UI, an interface to the SIM card and a controller CTRL for controlling the operation of the mobile station. The controller CTRL comprises one or more processors with associated memory and input/output devices, bus controllers and the like. Such details are known to the skilled reader and they will not be shown separately. The memory contains software modules executed by the processor(s) and fixed and variable data. According to the invention, one of the software modules is arranged to support enhanced services requiring interactive communication with the SIM card. Such a software module is labelled 'WAE' (wireless application environment). Alternatively, the software module could be called a protocol layer, but this is only a matter of semantics, since for each protocol layer, there is usually a software module which implements the protocol layer. 'WAE' is a term used by the WAP Forum (see Spec-WAEOverview-19990616 pdf at the WAP Forum), but the software module could also be referred to by its ETSI- defined term 'MEXE' (Mobile station EXecution Environment, see ETSI GSM recommendation 02.57). Again, it is not essential for understanding the invention whether the software module implements the WASP Forum recommendations or the ETSI recommendations, or both.

The remaining software of the mobile equipment is collectively referred to as its operating system OS. It contains all the software required for implementing the prior art functions and features of the mobile equipment.

The mobile equipment ME also comprises several local communication channels/devices, One of them is a user interface UI, which typically consists of a keypad and a display. Instead of, or in addition to the keypad/display, the user interface may be adapted to support oral communication with the user. In such a case the user interface UI comprises software for synthesizing and recognizing speech via the speaker and the microphone of the mobile equipment. Another local communication channel is a data cable DC or an infrared link IR to personal computers or palmtop organizers. An emerging local communication channel is known as the Bluetooth (BT) concept. It is a short-range 2.45 GHz radio interface as defined by the Bluetooth consortium.

### Server-SIM communication

As stated above, a first aspect of the invention relates to conveying information generated at the fixed side of the radio network to the mobile equipment and finally to the SIM card. A first relevant problem is how to send information from an application in the server S via the radio access network RAN to the software module WAE without burdening the application designer with low-level protocols such as short message service or cell broadcast. Arrow 1a depicts this data stream. Two solutions for this problem are disclosed in the following :

One solution comprises using a WML (wireless Markup Language) script function which starts an existing SAT application and a WAP terminal profile for describing WAP support in the ME to the WAP and the SIM card,

Another solution comprises adding a new URL (Universal Resource Locator) scheme called "sat" (for SIM Application Toolkit) for launching a SAT session from the SIM card.

A second relevant problem is how to send information from the software module WAE to the SIM card, Arrow 2 depicts this data stream. According to the invention, the WAE module emulates a situation in which the mobile equipment ME has received from the RAN a low-level connectionless message, such as a short message or cell broadcast message. For these two situations, ETSI recommendation 11.14 defines two ME to SIM messages (commands), which are called Envelope [SMS-PP Download] and Envelope [Cell Broadcast Download], respectively. In the following, abbreviated names SM-envelope and CB-envelope will be used. It should be noted that, currently, the envelope messages are limited to conveying approximately 250 bytes of information per message, which means that longer data streams must be split into multiple smaller fragments.

### Conveying local information to the SIM

A second aspect of the invention relates to conveying information generated or received locally to the SIM. Arrow 1b depicts this data stream. As stated above, the mobile equipment ME may generate such local information independently, or it may receive it via its user interface or a short range communication channel/device (a wired or infrared data link, Bluetooth, etc.) Conveying local information to the WAE module presents few or no problems, because there are no intervening network elements, and the designer is at liberty to design appropriate protocols and/or interfaces. The second part of carrying out the invention, i.e. conveying information from the WAE module to the SIM card, can be solved exactly as described under the first aspect, see "Server-SIM communication". What is novel in this respect is that the SIM is led to believe that the ME has received one or more over-the-air messages, whereas in reality it has not

Fig. 2 is a signalling diagram which illustrates one possible practical application of the invention, namely maintaining a calendar application. It is assumed that the user of the mobile station MS maintains a calendar which resides in the fixed part of the network. The calendar may be located virtually anywhere (e.g. in the user's corporate local area network) as long as the server S has access to it. Additionally, a subset of the calendar is kept in the user's mobile station. Fig. 2 illustrates a series of events in which the local calendar is updated on the basis of the main calendar.

In step 2-2 the server S transmits via the RAN to the WAE module a reminder relating to a calendar event. As stated above, two possible transmission mechanisms for this step are disclosed in references 1 and 2. In step 2-4 the WAE module inquires, via the mobile station's user interface UI, whether the user wishes to have a second reminder in a few minutes' time, and whether s/he wishes to update the local calendar. In step 2-6 the user declines the second reminder but requests an update of the local calendar. In step 2-8 the WAE module interprets, reformats and re-sends the user's reply to the server. In this case the WAE module requests the server to send updated calendar data. In step 2-10 the server sends the updated calendar data to the WAE module. Next the WAE module loads the updated calendar data to the SIM. This operation consists of three steps. In step 2-12 the WAE module retrieves the old calendar data from the SIM. In step 2-14 the WAE module updates the calendar data and stores it in the SIM. In this step, novel use is made of the SM-envelope or CB-envelope message, as stated earlier. In step 2-16 the SIM acknowledges reception of the updated data. In step 2-18 the WAE module reformats the calendar data and displays it in the user interface.

## Claims

1. A method for sending information from a server (S) via a telecommunication network (RAN) to a mobile station (MS) comprising a mobile equipment (ME) and a Subscriber Identity Module, or SIM,
**characterized in that** the method comprises the steps of:
the mobile equipment (ME) is provided with a software module (WAE) for communicating with the network (RAN) using a first protocol which supports sending an arbitrarily long data stream,
the server (S) formats the information to be sent into a first data stream (1 a) and sends it to the network (RAN).
the network (RAN) sends the first data stream (1a) to the mobile equipment (ME) using the first protocol, and
the mobile equipment (ME) uses the first data stream (1a) for generating a second data stream (2) and sends the second data stream (2) to the SIM by emulating reception of one or more low-level connectionless messages, the number of which is determined on the basis of the length of said second data stream.

2. A method for sending locally generated or received information from a mobile equipment (ME) to a Subscriber Identity Module, or SIM,
**characterized in that** the method comprises the steps of:
the mobile equipment (ME) is provided with a software module (WAE) for implementing and/or supporting at least one software application,
the mobile equipment (ME) generates or receives locally, in the form of a first data stream (1b), the information to be sent to the SIM,
the mobile equipment (ME) uses the first data stream (1b) for generating a second data stream (2) and sends the second data stream (2) to the SIM by emulating reception of one or more low-level connectionless messages, the number of which is determined on the basis of the length of said second data stream.

3. A method according to claim 1, **characterized in that** said first protocol comprises sending a universal resource locator.

4. A method according to claim 1, **characterized in that** said first protocol comprises sending a wireless markup language script.

5. A method according to any one of the preceding claims, **characterized in that** each of said one or more low-level connectionless messages is an Envelope [SMS-PP Download] or Envelope [Cell Broadcast Download] message conforming to ETSI recommendation GSM 11.14.

6. A mobile equipment (ME) for receiving information from a server (S) via a telecommunication network (RAN), said mobile equipment (ME) comprising interface means to a Subscriber Identity Module, or SIM,
**characterized in that** the mobile equipment (ME):
comprises a software module (WAE) for communicating with the network (RAN) using a first protocol which supports sending an arbitrarily long data stream,
is adapted to receive the information from the server (S) via the network in a first data stream (1a) according to the first protocol, and
is adapted to use the first data stream (1a) for generating a second data stream (2) and to send the second data stream (2) to the SIM by emulating reception of one or more low-level connectionless messages, the number of which is determined on the basis of the length of said second data stream.

7. A mobile equipment (ME) which comprises interface means to a Subscriber Identity Module, or SIM,
**characterized in that** the mobile equipment (ME):
comprises a software module (WAE) for implementing and/or supporting at least one software application,
is adapted to generate or receive locally, in the form of a first data stream (1 b), information to be sent to the SIM, and
is adapted to use the first data stream (1 b) for generating a second data stream (2) and to send the second data stream (2) to the SIM by emulating reception of one or more low-level connectionless messages, the number of which is determined on the basis of the length of said second data stream.

## Patentansprüche

1. Verfahren zur Versendung von Informationen von einem Server (S) über ein Telekommunikationsnetzwerk (RAN) an eine Mobilstation (MS), die eine Mobilausstattung (ME) und ein Subcsriber-Identity-Modul oder SIM umfasst,
**dadurch gekennzeichnet, dass** das Verfahren folgende Schritte umfasst:
die Mobilausstattung (ME) wird mit einem Softwaremodul (WAE) fürs Kommunizieren mit dem Netzwerk (RAN) mit Hilfe eines ersten Protokolls versehen, das die Versendung eines beliebig langen Datenstroms unterstützt,
der Server (S) formatiert die zu versendenden Informationen in einen ersten Datenstrom (1 a) und versendet ihn zum Netzwerk (RAN),
das Netzwerk (RAN) versendet den ersten Datenstrom (1 a) zur Mobilausstattung (ME) mit Hilfe des ersten Protokolls, und
die Mobilausstattung (ME) benutzt den ersten Datenstrom (1 a) zur Erzeugung eines zweiten Datenstroms (2) und versendet den zweiten Datenstrom (2) zum SIM, indem sie den Empfang von einer oder mehreren Low-Level-Connectionless-Messages emuliert, deren Zahl auf Basis der Länge des zweiten Datenstroms bestimmt wird.

2. Verfahren zur Versendung örtlich erzeugter oder empfangener Informationen von einer Mobilausstattung (ME) zu einem Subcsriber-Identity-Modul oder SIM,
**dadurch gekennzeichnet, dass** das Verfahren folgende Schritte umfasst:
die Mobilausstattung (ME) wird mit einem Softwaremodul (WAE) zur Implementierung und/oder Unterstützung zumindest einer Softwareanwendung versehen,
die Mobilausstattung (ME) erzeugt oder empfängt örtlich, in Form eines ersten Datenstroms (1 b), die zum SIM zu versendenden Informationen,
die Mobilausstattung (ME) benutzt den ersten Datenstrom (1 b) zur Erzeugung eines zweiten Datenstroms (2) und versendet den zweiten Datenstrom (2) zum SIM, indem sie den Empfang einer oder mehrerer Low-Level-Messages emuliert, deren Zahl auf Basis der Länge des zweiten Datenstroms bestimmt wird.

3. Verfahren nach Anspruch 1, **dadurch gekennzeichnet, dass** das erste Protokoll die Versendung eines Universal Resource Locators umfasst.

4. Verfahren nach Anspruch 1, **dadurch gekennzeichnet, dass** das erste Protokoll die Versendung eines Wireless Markup Language Scripts umfasst.

5. Verfahren nach einem der vorhergehenden Ansprüche, **dadurch gekennzeichnet, dass** jede der einen oder mehreren Low-Level-Connectionless-Messages eine Envelope [SMS-PP Download] oder Envelope [Cell Broadcast Download] Message ist, die zur ETSI-Empfehlung GSM 11.14 konform ist.

6. Mobilausstattung (ME) für den Empfang von Informationen von einem Server (S) über ein Telekommunikationsnetzwerk (RAN), welche Mobilausstattung (ME) Schnittstellenmittel zu einem Subcsriber-Identity-Modul oder SIM umfasst,
**dadurch gekennzeichnet, dass** die Mobilausstattung (ME):
ein Softwaremodul (WAE) fürs Kommunizieren mit dem Netzwerk (RAN) mit Hilfe eines ersten Protokolls umfasst, das die Versendung eines beliebig langen Datenstroms unterstützt,
geeignet ist, die Informationen vom Server (S über das Netzwerk in einem ersten Datenstrom (1 a) gemäß dem ersten Protokoll) zu empfangen, und
geeignet ist, den ersten Datenstrom (1 an) zur Erzeugung eines zweiten Datenstroms (2) zu benutzen und den zweiten Datenstrom (2) zum SIM zu versenden, indem der Empfang einer oder mehrerer Low-Level-Connectionless-Messages emuliert wird, deren Zahl auf Basis der Länge des zweiten Datenstroms bestimmt wird.

7. Mobilausstattung (ME), die Schnittstellenmittel zu einem Subscriber-Identity-Modul oder SIM umfasst,
**dadurch gekennzeichnet, dass** die Mobilausstattung (ME):
ein Softwaremodul (WAE) zur Implementierung und/oder zur Unterstützung zumindest einer Softwareanwendung umfasst,
geeignet ist, die zum SIM zu versendenden Informationen in Form eines ersten Datenstroms (1 b) örtlich zu erzeugen oder zu empfangen, und
geeignet ist, den ersten Datenstrom (1 b) zur Erzeugung eines zweiten Datenstroms (2) zu benutzen und den zweiten Datenstrom (2) zum SIM zu versenden, indem der Empfang einer oder mehrerer Low-Level-Connectionless-Messages emuliert wird, deren Zahl auf Basis der Länge des zweiten Datenstroms bestimmt wird.

## Revendications

1. Procédé pour envoyer une information à partir d'un serveur (S) via un réseau de télécommunication (RAN) à une station mobile (MS) comprenant un équipement mobile (ME) et un module d'identification de l'abonné, ou SIM,
**caractérisé en ce que** le procédé comprend les phases suivantes :
l'équipement mobile (ME) est muni d'un module logiciel (WAE) pour communiquer avec le réseau (RAN) utilisant un premier protocole qui soutient l'envoi d'un flux de données arbitrairement long,
le serveur (S) formate l'information à envoyer dans un premier flux de données (1a) et l'envoie au réseau (RAN),
le réseau (RAN) envoie le premier flux de données (1a) à l'équipement mobile (ME) utilisant le premier protocole, et
l'équipement mobile (ME) utilise le premier flux de données (1a) pour générer un second flux de données (2) et envoie le second flux de données (2) au module SIM en émulant réception d'un ou de plusieurs messages de niveau inférieur sans connexion, le nombre desquels est défini sur la base de la longueur dudit second flux de données.

2. Procédé pour envoyer une information générée ou reçue localement à partir d'un équipement mobile (ME) à un module d'identification de l'abonné, ou SIM,
**caractérisé en ce que** le procédé comprend les phases suivantes :
l'équipement mobile (ME) est muni d'un module logiciel (WAE) pour implanter et/ou soutenir au moins une application logicielle,
l'équipement mobile (ME) génère ou reçoit localement, sous forme d'un premier flux de données (1b), l'information à envoyer au module SIM,
l'équipement mobile (ME) utilise le premier flux de données (1b) pour générer un second flux de données (2) et envoie le second flux de données (2) au module SIM en émulant réception d'un ou de plusieurs messages de niveau inférieur sans connexion, le nombre desquels est défini sur la base de la longueur dudit second flux de données.

3. Procédé selon la revendication 1, **caractérisé en ce que** le premier protocole comprend l'envoi d'un localisateur de source universel.

4. Procédé selon la revendication 1, **caractérisé en ce que** ledit premier protocole comprend l'envoi d'un script de langage de balisage sans fil.

5. Procédé selon l'une quelconque des revendications précédentes, **caractérisé en ce que** chacun desdits un ou plusieurs messages de niveau inférieur sans connexion est un message Envelope [SMS-PP Download] ou un message Envelope [Cell Broadcast Download] conforme à la recommandation ETSI GSM 11.14.

6. Equipement mobile (ME) pour recevoir une information à partir d'un serveur (S) via un réseau de télécommunication (RAN), ledit équipement mobile (ME) comprenant des moyens d'interface vers un module d'identification de l'abonné, ou SIM,
**caractérisé en ce que** l'équipement mobile (ME) :
comprend un module logiciel (WAE) pour communiquer avec le réseau (RAN) utilisant un premier protocole qui soutient l'envoie d'un flux de données arbitrairement long,
est adapté pour recevoir l'information à partir du serveur (S) via le réseau dans un premier flux de données (1a) selon le premier protocole, et
est adapté pour utiliser le premier flux de données (1a) pour générer un second flux de données (2) et pour envoyer le second flux de données (2) au module SIM en émulant réception d'un ou de plusieurs messages de niveau inférieur sans connexion, le nombre desquels est défini sur la base de la longueur dudit second flux de données.

7. Equipement mobile (ME) qui comprend des moyens interface au module d'identification de l'abonné, ou SIM,
**caractérisé en ce que** l'équipement mobile (ME) : comprend un module logiciel (WAE) pour implanter et/ou soutenir au moins une application logicielle,
est adapté pour générer ou recevoir localement, sous forme d'un premier flux de données (1b), l'information à envoyer au module SIM, et
est adapté pour utiliser le premier flux de données (1b) pour générer un second flux de données (2) et pour envoyer le second flux de données (2) au module SIM en émulant la réception d'un ou de plusieurs messages de niveau inférieur sans connexion, le nombre desquels est défini sur la base de la longueur dudit second flux de données.
